# EUROPÄISCHE PATENTSCHRIFT

(11) **EP 2 940 223 B1**
(45) Veröffentlichungstag und Bekanntmachung des Hinweises auf die Patenterteilung: **14.08.2019**
(21) Anmeldenummer: 15163533.1
(22) Anmeldetag: 14.04.2015
(51) Int. Cl.: E03F 5/14, E02B 8/02, B01D 33/00

(54) **SIEBTROMMEL SOWIE DAMIT AUSGERÜSTETE VORRICHTUNG ZUM ENTFERNEN VON SIEBGUT AUS EINER FLÜSSIGKEIT**
FILTER DRUM AND DEVICE EQUIPPED WITH SAME FOR REMOVING SCREENINGS FROM A LIQUID
TAMBOUR CRIBLEUR ET DISPOSITIF EN ÉTANT ÉQUIPÉ DESTINÉ À L'ÉLIMINATION DANS UN LIQUIDE DE PRODUIT À TAMISER

(30) Priorität: 30.04.2014 DE 102014106079
(43) Veröffentlichungstag der Anmeldung: 04.11.2015
(73) Patentinhaber: Huber SE, 92334 Berching (DE)
(72) Erfinder: Spenger, Franz, 91187 Röttenbach (DE); Stiegler, Reinhard, 92334 Berching (DE); Hummel, Daniel, 92334 Berching (DE); Kink, Michael, 92318 Neumarkt (DE)
(74) Vertreter: Baudler, Ron

(56) Entgegenhaltungen:
- EP-A1- 2 433 692
- DE-A1- 4 136 401
- DE-U1- 9 421 793

## Beschreibung

Die vorliegende Erfindung betrifft eine Siebtrommel für eine Vorrichtung zum Entfernen von Siebgut aus einer Flüssigkeit, insbesondere Abwasser, wobei die Siebtrommel zumindest im Bereich einer Stirnseite eine Öffnung aufweist, über die sie mit einer ein Siebgut mitführenden Flüssigkeit beschickbar ist.

Ferner wird eine Vorrichtung zum Entfernen von Siebgut aus einer Flüssigkeit, insbesondere Abwasser, vorgeschlagen, wobei die Vorrichtung eine im Betrieb der Vorrichtung zumindest teilweise in die Flüssigkeit eintauchende und mit Hilfe eines Antriebs um eine Drehachse antreibbare Siebtrommel umfasst, die zumindest im Bereich einer Stirnseite eine Öffnung aufweist, über die sie mit der das Siebgut mitführenden Flüssigkeit beschickbar ist, und wobei die Vorrichtung wenigstens eine teilweise innerhalb der Siebtrommel angeordnete Austragsvorrichtung für das Siebgut, vorzugsweise in Form einer Schneckenfördereinrichtung oder einer Absaugeinrichtung, umfasst, wobei die Austragsvorrichtung innerhalb der Siebtrommel einen Zuführbereich, beispielsweise in Form eines Einwurftrichters, für das Siebgut aufweist.

Eine entsprechende Vorrichtung ist beispielsweise aus der DE 34 20 157 C1 bekannt. Die darin beschriebene Anlage weist eine mit ihrer Drehachse schräg in einen Abwasserkanal eingestellte zylindermantelförmige Siebtrommel auf, die anströmseitig (d. h. in eine der Strömungsrichtung des im Abwasserkanal strömenden Abwassers entgegengesetzte Richtung) hydraulisch offen und abströmseitig im Wesentlichen hydraulisch geschlossen ausgebildet ist. Die Siebtrommel ist beispielsweise mit einer Schlitzlochung versehen, die auf der Innenseite eine Abscheidefläche für das vom Abwasser mitgeführte Siebgut bildet, wobei die Flüssigkeit durch die Schlitze hindurchtritt und somit im Abwasserkanal verbleibt. Die Siebtrommel wird schließlich gemeinsam mit einer teilweise in die Siebtrommel ragenden Förderschnecke umlaufend angetrieben, wobei die Förderschnecke im Bereich eines innerhalb der Siebtrommel angeordneten Einwurftrichters für das Siebgut beginnt. Oberhalb des Einwurftrichters ist im Bereich der Außenseite der Siebtrommel eine ortsfest angeordnete Ablöseeinrichtung in Form einer Bürstenwalze oder einer Spritzwasserleiste vorgesehen, um von außen das an der Innenseite der Siebtrommel anhaftende Siebgut abzulösen. Das Siebgut fällt schließlich in den Einwurftrichter und kann von der daran anschließenden Förderschnecke zu einer außerhalb des Abwasserkanals liegenden Abwurfstelle transportiert werden.

Weitere Siebtrommeln bzw. Siebvorrichtungen mit entsprechenden Siebtrommeln sind in der EP 2 433 692 A1 (gefaltete Siebtrommel), der DE 41 36 401 A1 (gefaltete und ungefaltete Siebtrommeln) oder der DE 94 21 793 U1 (feststehende Siebtrommel) beschrieben. Das Dokument DE 41 36 401 A1 offenbart alle Merkmale im Oberbegriff des Anspruchs 1 und wird als nächstliegender Stand der Technik angesehen.

Generell ist es im Zusammenhang mit den genannten Siebtrommeln üblich, die die Siebwandung bildenden Siebbleche miteinander bzw. mit einem Trägergerüst der Siebtrommel zu verschweißen, um der Siebtrommel die nötige Stabilität zu verleihen. Aufgrund der beim Schweißen entstehenden Hitze kann es jedoch zu lokalen Unwuchten der Siebtrommel kommen, die im späteren Betrieb der Anlage zu einem erhöhten Verschleiß beim Drehen der Siebtrommel führen können.

Aufgabe der vorliegenden Erfindung ist es daher, eine gattungsgemäße Siebtrommel sowie eine damit ausgerüstete Vorrichtung zum Entfernen von Siebgut aus einer Flüssigkeit vorzuschlagen, die sich durch eine einfache und dennoch präzise Konstruktion auszeichnen.

Die Aufgabe wird gelöst durch eine Siebtrommel und eine Vorrichtung zum Entfernen von Siebgut aus einer Flüssigkeit mit den Merkmalen der unabhängigen Patentansprüche.

Die Siebtrommel (die im Wesentlichen eine zylindrische Grundform aufweisen sollte) besitzt eine gefaltete und eine Vielzahl von Sieböffnungen aufweisende Siebwandung. Durch die gefaltete Siebwandung kann (bei gleichbleibendem Siebtrommeldurchmesser) im Vergleich zu herkömmlichen Siebtrommeln, die eine glatte Siebwandung aufweisen, eine erheblich höhere aktive Siebfläche zur Verfügung gestellt werden. Ein weiterer Vorteil der Faltung liegt darin, dass sich das zurückgehaltene Siebgut in den durch die Faltung entstehenden innenliegenden Vertiefungen ansammeln und nach oben gefördert werden kann, sofern die Siebtrommel in ihrem Betrieb um eine horizontale oder schräge Drehachse gedreht wird. Nicht zuletzt erhält die Siebtrommel durch die Faltung der Siebfläche eine erhöhte Stabilität, die sich positiv auf deren Lebensdauer auswirkt.

Ferner ist vorgesehen, dass die Siebtrommel eine Tragstruktur umfasst. Erfindungsgemäß zeichnet sich die Siebtrommel dadurch aus, dass die Tragstruktur die Siebwandung ausschließlich klemmend fixiert. Die Siebwandung besteht aus einem oder mehreren gefalteten Siebblechen, die beispielsweise eine Vielzahl von Sieböffnungen in Form von Bohrungen oder Schlitzen für den Durchtritt der zu siebenden Flüssigkeit aufweisen. Die Siebwandung bzw. deren einzelne Siebbleche sind nun ausschließlich von der Tragstruktur bzw. deren noch näher zu beschreibenden Bestandteile geklemmt. Ein Verschweißen von Tragstruktur und Siebwandung ist somit im Gegensatz zum Stand der Technik nicht mehr vorgesehen, so dass fertigungsbedingte Unwuchten der Siebtrommel nahezu ausgeschlossen sind.

Die Klemmung ist dabei vorzugsweise derart stark, dass eine Relativbewegung zwischen Tragstruktur und Siebwandung nur noch bei einer Krafteinwirkung möglich ist, die während des Normalbetriebs der Siebtrommel in der unten näher beschriebenen Vorrichtung nicht auftritt. Im Ergebnis sind Tragstruktur und Siebwandung also grundsätzlich starr miteinander verbunden, auch wenn die Verbindung ausschließlich durch auf die Siebwandung einwirkende Klemmelemente erfolgt.

Die Klemmung erfolgt im Übrigen vorzugsweise im Bereich zumindest eines Teils der Außenkanten der Siebwandung bzw. deren Einzelelemente (d. h. der einzelnen Siebbleche, aus denen sich die Siebwandung eventuell zusammensetzt). Beispielsweise wäre es denkbar, dass die Siebwandung aus mehreren, jeweils eine zylindermantelförmige Grundstruktur aufweisenden, Ringelementen besteht, die wiederum im Bereich ihrer in Umfangsrichtung verlaufenden Außenkanten von der Tragstruktur klemmend fixiert sind. Die Tragstruktur kann zudem generell ein oder mehrere Tragringe sowie die Tragringe in Richtung der Drehachse der Siebtrommel miteinander verbindende Verbindungselemente (z. B. in Form von mit den Tragringen verbundenen Verbindungsstäben) umfassen.

Ebenso bringt es Vorteile mit sich, wenn die Siebwandung, vorzugsweise in einem senkrecht zur Drehachse verlaufenden Querschnitt, zickzackartig oder stufenförmig gefaltet ist, so dass sich Siebwandtäler mit Siebwandbergen abwechseln. Vorzugsweise folgt die Siebwandung prinzipiell der Form eines Zylindermantels, wobei der Abstand zwischen benachbarten Siebwandbergen und Siebwandtälern um ein Vielfaches kleiner ist als der Durchmesser der Siebtrommel. Zudem ist es von Vorteil, wenn die Faltung über den Umfang der Siebtrommel gleichmäßig verläuft.

Des Weiteren ist es vorteilhaft, wenn die Siebwandtäler und die Siebwandberge parallel oder windschief zur Drehachse der Siebtrommel verlaufen. Weist die Drehachse der Siebtrommel in eingebautem Zustand eine horizontale oder hierzu schräg verlaufende Ausrichtung auf, so ist insbesondere eine parallele Ausrichtung der Siebwandtäler und -berge von Vorteil. Von der Siebwandung zurückgehaltenes Siebgut wird in diesem Fall beim Drehen der Siebtrommel nach oben befördert und kann schließlich in einen in die Siebtrommel ragende Austragsvorrichtung, beispielsweise eine Förderschnecke oder den Eingang einer Absauganlage fallen und aus der Siebtrommel entfernt werden. Alternativ hierzu kann die Austragsvorrichtung auch einen Auslass für das Siebgut aufweisen.

Vorteilhaft ist es zudem, wenn die Tragstruktur einen oder mehrere Tragringe umfasst, wobei die entsprechenden Tragringe derart von der Siebwandung umgeben sind, dass die Siebwandtäler an den Tragringen in Umfangsrichtung der Siebtrommel anliegen und hierbei entsprechend klemmend gehalten werden. Der oder die Tragringe stützen die Siebwandung hierbei von innen her ab und bilden damit eine Auflagefläche für die Siebwandung bzw. deren Siebwandtäler, wobei die Siebwandung mit Hilfe von Klemmelementen (beispielsweise in Form der im folgenden Absatz genannten Klemmringe) gegen den oder die Tragringe gepresst und damit fixiert sind.

Vorzugsweise sind die Tragringe in Richtung der Drehachse nebeneinander angeordnet und verlaufen konzentrisch zueinander. Insbesondere kann jeweils ein Tragring im Bereich der beiden Stirnseiten der Siebtrommel angeordnet sein. Darüber hinaus können ein oder mehrere Tragringe zwischen den beiden Stirnseiten platziert sein, um die Stabilität der Siebtrommel zu erhöhen (wobei die Tragringe beispielsweise eine in Richtung der Drehachse verlaufende Breite aufweisen, deren Betrag zwischen 2 und 8 cm liegt). Die gegenseitigen Abstände der einzelnen Tragringe sollten schließlich in etwa gleich sein. Ferner ist es für den Einsatz der Siebtrommel im Zusammenhang mit der Reinigung von Abwasser sinnvoll, dass die Siebtrommel bzw. deren Tragringe einen Druchmesser von über einen Meter, bei Bedarf auch über zwei Meter, aufweisen. In jedem Fall können die Tragringe aus Metall gefertigt sein und mit, vorzugsweise in Richtung der Drehachse der Siebtrommel verlaufenden, Verbindungselementen (z. B. in Form von parallel zur Drehachse verlaufenden Verbindungsstangen) verbunden sein, wobei die Verbindungselemente und die Tragringe kraft-, form- und oder stoffschlüssig miteinander verbunden sein können.

Des Weiteren ist es vorteilhaft, wenn die Tragstruktur einen oder mehrere Klemmringe umfasst, wobei der jeweilige Klemmring die Siebwandung derart umgibt, dass er in Umfangsrichtung der Siebtrommel an den Siebwandbergen anliegt. Der oder die Klemmringe umgeben somit die Siebwandung im Bereich ihrer Außenseite und pressen diese vorzgusweise gegen den oder die oben genannten Tragringe. Mit anderen Worten ist es also von Vorteil, wenn jeweils ein Tragring und ein Klemmring einen zwischen beiden liegenden Ringspalt ausbilden, in den schließlich wenigstens eine in Umfangsrichtung der Siebtrommel verlaufende Außenkante der Siebwandung eingreift. Die genannte Außenkante wird in diesem Fall zwischen Tragring und Klemmring geklemmt und hierdurch fixiert. In einem zur Drehachse senkrecht verlaufenden Schnitt verläuft die Siebwandung in diesem Fall zwischen den entsprechenden Trag- und Klemmringen, wobei der oder die Tragringe von der Siebwandung und die Siebwandung von dem bzw. den Klemmringen umgeben sind.

Ferner ist es vorteilhaft, wenn jeweils ein Tragring und ein Klemmring in einer gemeinsamen und senkrecht zur Drehachse verlaufenden Ebene angeordnet sind. Die auf die Siebwandung von außen (durch die Klemmringe) und innen (durch die Tragringe) einwirkenden Klemmkräfte verlaufen in diesem Fall ebenfalls in einer Ebene, so dass ungewollte Verformungen der Siebwandung vermieden werden. Darüber hinaus kann es von Vorteil sein, wenn die senkrecht zur Drehachse verlaufende Dicke der Tragringe größer ist als die Dicke der Klemmringe, da die zuerst genannten Tragringe die tragende Funktion der Siebtrommel zumindest teilweise übernehmen und dadurch einer erhöhten Belastung ausgesetzt sind.

Besonders vorteilhaft ist es, wenn die Siebwandung unter einer Vorspannung zwischen den entsprechenden Trag- und Klemmringen eingespannt ist. Hierdurch wir eine Relativbewegung zwischen Siebwandung und Trag- bzw. Klemmringen besonders effektiv unterbunden werden, so dass auf zusätzliche Fixierungen verzichtet werden kann. Die Faltungen der Siebwandungen sind in diesem Fall gegenüber der Form, die die Faltungen vor der Klemmung durch die Klemmringe aufweist, in bezüglich der Drehachse radial verlaufender Richtung geringfügig gestaucht.

Vorteile bringt es zudem mit sich, wenn die Siebwandung mehrere in Richtung der Drehachse der Siebtrommel nebeneinander angeordnete Einzelelemente umfasst. Bei den Einzelelementen kann es sich um einzelne Siebwandringe handeln, die in Richtung der Drehachse benachbart zueinander angeordnet sind. Ebenso ist es denkbar, dass die Siebwandung oder die genannten Siebwandringe aus Einzelelementen bestehen, die in Umfangsrichtung der Siebtrommel zusammengesetzt, vorzugsweise verschweißt, sind (alternativ hierzu könnte auf eine entsprechende Verbindung auch verzichtet werden, so dass die jeweiligen Einzelelemente ausschließlich durch die Klemmung an der Tragstruktur gehalten und hierdurch zueinander ausgerichtet sind). Ferner ist es vorteilhaft, wenn wenigstens zwei der in Richtung der Drehachse zueinander benachbart angeordneten Einzelelemente durch einen oder mehrere in Umfangsrichtung der Siebtrommel verlaufende Stege voneinander getrennt sind. Die Stege bewirken eine Verstärkung der Tragstruktur der Siebtrommel. Zudem ist es möglich, jeweils einen Tragring mit jeweils einem Klemmring mit Hilfe eines Stegs miteinander zu verbinden.

Besondere Vorteile bringt es mit sich, wenn zumindest ein Teil der Tragringe und/oder zumindest ein Teil der Klemmringe mit einem oder mehreren der Stege stoffschlüssig verbunden sind. Beispielsweise wäre es denkbar, jeweils einen Steg mit einem Tragring und/oder einem Klemmring zu verschweißen. Die Verbindung von Steg und Tragring bzw. Steg und Klemmring kann hierbei in Umfangsrichtung der Siebtrommel nur abschnittsweise erfolgen. Generell ist es jedoch von Vorteil, wenn jeweils ein Klemmring mit einem Tragring und dem dazwischen verlaufenden Steg in einem parallel zur Drehachse verlaufenden Schnitt eine Doppel-T-Struktur aufweist.

Auch ist es von Vorteil, wenn wenigstens zwei der Einzelelemente der Siebwandung mit einem gemeinsamen Tragring und/oder einem gemeinsamen Klemmring in Kontakt stehen. Insbesondere ist es in diesem Zusammenhang von Vorteil, wenn jeweils ein Tragring und jeweils ein Klemmring mit dem beide Ringe verbindenden Steg einen oder zwei bezüglich des Stegs gegenüberliegende Ringnuten ausbilden, die schließlich der Aufnahme der Außenkanten entsprechender Einzelelemente der Siebwandung dienen. Während eine Ringnut von Vorteil ist, wenn der entsprechende Steg im Bereich einer Stirnseite der Siebtrommel platziert ist, sind zwei Ringnuten dann von Vorteil, wenn sich der Steg zwischen zwei benachbarten zylindermantelförmigen Einzelelementen der Siebwandung befindet. Der jeweilige, vorzugsweise ringförmige und konzentrisch zu Trag- und Klemmring verlaufende, Steg stellt hierbei eine Unterbrechung der durch die Siebwandung gebildeten Siebfläche dar, da er die, insbesondere zylindermantelförmigen, Einzelelemente der Siebwandung in Richtung der Drehachse voneinander beabstandet. Selbstverständlich ist es auch denkbar, die Siebwandung aus mehreren zylindermantelförmigen Wandabschnitten zusammenzusetzen, die wiederum aus entsprechenden Einzelelementen zusammengesetzt sind (wobei die Einzelelemente beispielsweise als einzelne Ringabschnitte vorliegen können, wobei mehrere Ringabschnitte in eingebautem, d. h. geklemmten, Zustand jeweils einen der genannten zylindermantelförmigen Wandabschnitte bilden können).

Besondere Vorteile bringt es mit sich, wenn die Siebtrommel eine oder mehrere in Richtung der Drehachse zueinander beabstandete Spannringe umfasst, die die Siebwandung im Bereich ihrer Außenseite umgeben. Die Spannringe dienen der Erhöhung der Stabilität der Siebtrommel und können beispielsweise in Form von Flachstahlringen vorliegen. Ferner ist es denkbar, dass die Spannringe derart eng an der Siebwandung bzw. deren Siebwandbergen anliegen, dass keine zusätzliche Fixierung an der Siebwandung nötig ist, die Spannringe also ausschließlich über Reibkräfte in ihrer vorgesehenen Position gehalten werden.

Vorteilhaft ist es, wenn die Spannringe in Richtung der Drehachse der Siebtrommel zwischen den Tragringen und/oder zwischen den Klemmringen angeordnet sind, um den zwischen den zuletzt genannten Ringen vorhandenen Bereich der Siebfläche zu stabilisieren. Zudem sind vorzugsweise mehr als ein Spannring zwischen zwei benachbarten Trag- bzw. Klemmringen platziert. Beispielsweise wäre es sinnvoll, dass die Abstände zwischen benachbarten Spannringen in etwa dem Abstand zwischen einem Spannring und einem benachbarten Klemmring entsprechen.

Die erfindungsgemäße Vorrichtung zum Entfernen von Siebgut aus einer Flüssigkeit besitzt schließlich eine Siebtrommel gemäß bisheriger bzw. nachfolgender Beschreibung, wobei die genannten Merkmale der Siebtrommel einzeln oder in beliebiger Kombination verwirklicht sein können, solange hierbei keine Widersprüche entstehen und die Siebtrommel eine gefaltete und eine Vielzahl von Sieböffnungen aufweisende Siebwandung und eine Tragstruktur aufweist, welche die Siebwandung ausschließlich klemmend fixiert. Zudem umfasst die Vorrichtung einen Antrieb für die Siebtrommel, mit deren Hilfe diese im Betrieb der Vorrichtung um ihre Drehachse drehbar ist, um zurückgehaltenes Siebgut nach oben zu transportieren. Dort löst sich das Siebgut schwerkraftbedingt, insbesondere unterstützt durch eine bezüglich der Siebtrommel außenliegende Borsten- und/oder Spritzdüsenleiste, von der Innenfläche der Siebwandung und fällt in die bereits genannte Austragsvorrichtung. Die Austragsvorrichtung befördert das Siebgut, eventuell mit Restmengen der zu siebenden Flüssigkeit, aus der Vorrichtung heraus, wobei die Flüssigkeit die Siebtrommel passieren kann.

Insbesondere dient die Vorrichtung schließlich der Entfernung von Siebgut aus einem in einem Abwasserkanal strömenden Abwasser, wobei die Siebtrommel in diesem Fall vorzugsweise zur Horizontalen schräg ausgerichtet ist, so dass das Abwasser über die Öffnung im Bereich einer Stirnseite der Siebtrommel in diese einströmen und schließlich von dem Siebgut befreit werden kann.

Weitere Vorteile der Erfindung sind in den nachfolgenden Ausführungsbeispielen beschrieben. Es zeigen, jeweils schematisch:
- **Figur 1**: eine Vorrichtung zum Entfernen von Siebgut aus einem fließenden Abwasser,
- **Figur 2**: eine Siebtrommel für eine Vorrichtung zum Entfernen von Siebgut aus einer Flüssigkeit,
- **Figur 3**: einen Ausschnitt eines senkrecht zur Drehachse verlaufenden Querschnitts einer erfindungsgemäßen Siebtrommel,
- **Figur 4**: einen Ausschnitt eines parallel zur Drehachse verlaufenden Längsschnitts einer erfindungsgemäßen Siebtrommel, und
- **Figur 5**: einen Ausschnitt eines parallel zur Drehachse verlaufenden Längsschnitts einer erfindungsgemäßen Siebtrommel im Bereich einer ihrer Stirnseiten.

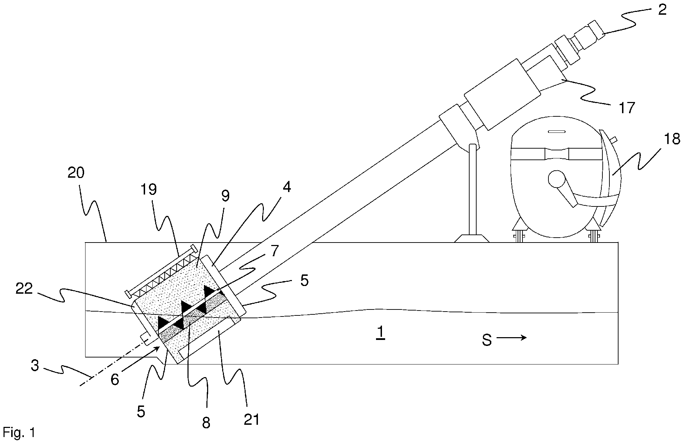

Figur 1 zeigt einen Teil eines Abwasserkanals 20, in welchem mit (nicht explizit gezeigtem) Siebgut verschmutztes Abwasser 1 mit einem meist variierenden Wasserstand in einer vorgegebenen Strömungsrichtung S strömt. Die darin angeordnete Vorrichtung zum Entfernen des Siebguts besitzt eine Siebtrommel 4, deren Drehachse 3 zur Horizontalen geneigt ist und vorzugsweise bis zum Boden des Abwasserkanals 20 (bzw. bis knapp darüber) reicht, wobei zwischen dem Abwasserkanal 20 und der Siebtrommel 4 eine, nicht gezeigte, Abdichtung vorhanden sein kann, so dass das verschmutzte Abwasser 1 die Vorrichtung nicht seitlich der Siebtrommel 4 passieren kann.

Die Siebtrommel 4 besitzt eine Siebwandung 9 mit einer im Wesentlichen zylindermantelförmigen Grundform und ist beispielsweise durch ein Loch- oder Schlitzblech gebildet. Ferner weist die Siebtrommel 4 anströmseitig eine mit einer Öffnung 6 versehene Stirnseite 5 auf, durch welche das verschmutzte Abwasser 1 in den Innenraum der Siebtrommel 4 einströmen kann. Abströmseitig kann hingegen eine abgedichtete und damit hydraulisch geschlossene Stirnseite 5 vorgesehen sein.

Während des Betriebs der Vorrichtung wird die Siebtrommel 4 mit Hilfe eines Antriebs 2 in eine Drehbewegung um ihre Drehachse 3 versetzt. Das von der Siebwandung 9 zurückgehaltene Siebgut wird hierbei nach oben gefördert, wobei die Siebtrommel 4 zur Unterstützung des Siebguttransports einzelne Mitnehmerleisten 21 aufweisen kann.

Im oberen Bereich ist schließlich eine Spritzdüsenleiste 19 angeordnet, die ein Ablösen des anhaftenden Siebguts bewirkt, so dass dieses nach unten in einen beispielsweise als Einwurftrichter ausgebildeten Zuführbereich 8 und von dort in den Bereich einer Austragsvorrichtung 7, beispielsweise in Form einer Schneckenfördereinrichtung, fällt (anstelle oder zusätzlich zu der Spritzdüsenleiste 19 können selbstverständlich auch Luftdüsen, Schaber oder Bürstenelemente vorgesehen sein).

Die Austragsvorrichtung 7 reicht schließlich bis in den Bereich eines Auswurfs 17 im oberen Abschnitt der Vorrichtung, so dass das Siebgut nach oben gefördert und schließlich über den Auswurf 17 in einen Container 18 entsorgt werden kann.

Der Antrieb 2 der Austragsvorrichtung 7 erfolgt in der Regel diskontinuierlich, so dass sich Stillstandszeiten mit Umlaufzeiten (in denen die Siebtrommel 4 gedreht wird) abwechseln. Zur Übertragung der Drehbewegung des Antriebs 2 auf die Siebtrommel 4 kann schließlich am unteren Ende der Schneckenwelle ein Antriebsarm 22 vorgesehen sein, der die Schneckenwelle der Austragsvorrichtung 7 und die Siebtrommel 4 miteinander verbindet.

Alternativ zu der in Figur 1 gezeigten Vorrichtung kann die erfindungsgemäße Siebtrommel 4 selbstverständlich auch in anderen Vorrichtungen zum Einsatz kommen, die der Entfernung von Siebgut aus einer Flüssigkeit dienen. So kann die Siebtrommel 4 beispielsweise auch in Vorrichtungen eingesetzt werden, die anstelle einer Schneckenfördereinrichtung (die einen Austrag von sehr feinem Siebgut meist nicht zuverlässig bewerkstelligen kann), eine Absaug- oder Abfließeinrichtung aufweisen. Die Rotation der Siebtrommel 4 erfolgt auch hier vorzugsweise über eine Antriebsachse, die wiederum mit einem Antrieb 2 verbunden ist. Das Siebgut, das sich auch bei derartigen Vorrichtungen an der rotierenden Innenfläche der Siebwandung 9 sammelt, wird wiederum, beispielsweise mit Hilfe einer Spritzdüsenleiste 19, von der Siebwandung 9 entfernt und gelangt schließlich in eine beispielsweise trogartig ausgebildete Auffangvorrichtung im Inneren der Siebtrommel 4. Das Siebgut und das Spritzwasser bilden schließlich eine Suspension, die mit Hilfe der Absaugeinrichtung der Austragsvorrichtung 7 abgesaugt und entsprechend weitertransportiert werden kann (alternativ kann auch eine Abfließeinrichtung vorgesehen sein, über die die Suspension schwerkraftbedingt aus der Siebtrommel 4 abfließen kann). Die Auffangvorrichtung kann dabei beispielsweise einen U-förmigen bzw. halbkreisförmigen Querschnitt aufweisen und ist in der Regel im Bereich der Drehachse 3 der Siebtrommel 4 angeordnet.

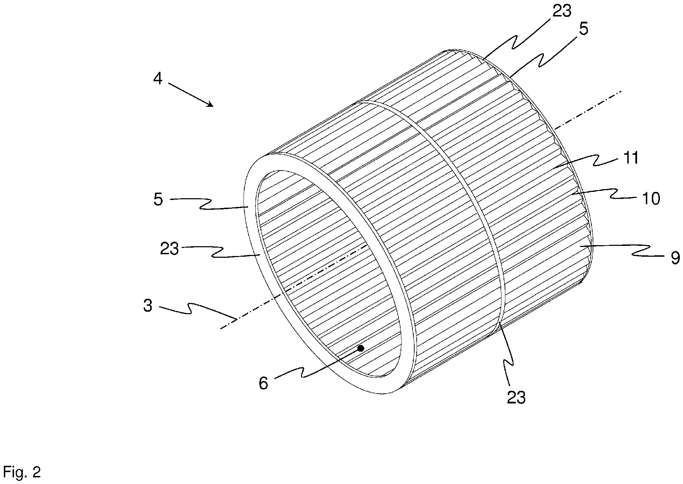

In jedem Fall ist vorgesehen, dass die Siebwandung 9 zickzackartig oder stufenförmig gefaltet ist, so dass sich Siebwandtäler 10 mit Siebwandbergen 11 abwechseln. Eine entsprechende Ausführungsform einer derartigen Siebwandung 9 zeigt exemplarisch Figur 2, wobei hier die Siebwandtäler 10 und Siebwandberge 11 parallel zur Drehachse 3 der Siebtrommel 4 verlaufen. Die Siebwandung 9 ist im gezeigten Fall mit Hilfe von im Bereich der Stirnseiten 5 angeordneten Stützringen 23 in der gezeigten zylindermantelförmigen Grundform gehalten, wobei ein zusätzlicher Stützring 23 zwischen den genannten Stirnseiten 5 verläuft und die Stützringe 23 mit der Siebwandung 9 verschweißt sind.

Die erfindungsgemäße Siebtrommel 4 unterscheidet sich nun vorrangig von der in Figur 2 gezeigten Variante durch die Fixierung der Siebwandung 9 an der diese tragende Tragstruktur.

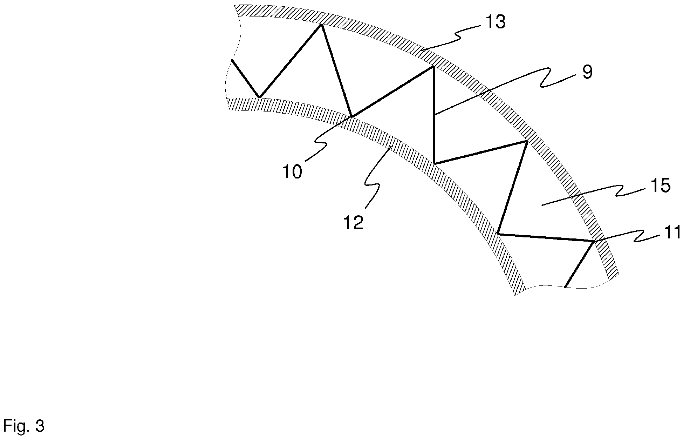

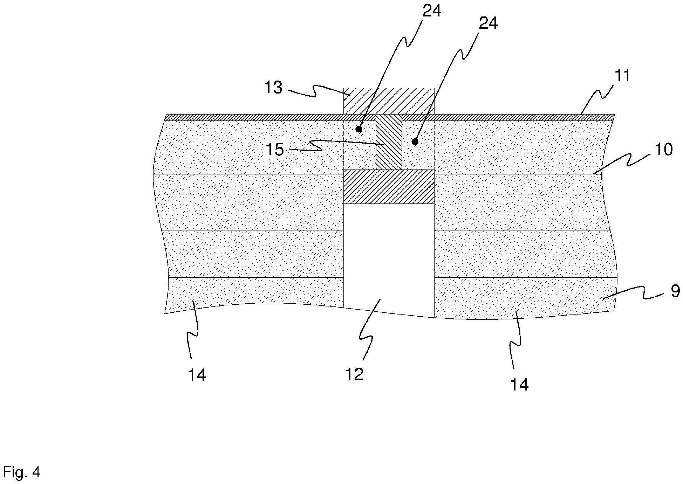

Wie der Zusammenschau der Figuren 3 (Ausschnitt eines senkrecht zur Drehachse 3 verlaufenden Querschnitts einer erfindungsgemäßen Siebtrommel 4) und 4 (Ausschnitt eines parallel zur Drehachse 3 verlaufenden Längsschnitts einer erfindungsgemäßen Siebtrommel 4) in diesem Zusammenhang zeigen, liegt die Siebwandung 9 mit ihrer Innenseite, d. h. über ihre Siebwandtäler 10, an einem oder mehreren in Richtung der Drehachse 3 benachbart zueinander angeordneten und in Umfangsrichtung der Siebtrommel 4 verlaufenden Tragringen 12 an, die beispielsweise durch jeweils einen Metallring gebildet sein können. Wie Figur 4 zu entnehmen ist, kann wenigstens ein Tragring 12 zwischen zwei benachbarten Einzelelementen 14 der Siebwandung 9 platziert sein, wobei die Siebwandung 9 über die Siebwandtäler 10 ihre umfangsseitigen Außenkanten auf dem gezeigten Tragring 12 aufliegen (selbstverständlich können sich in Richtung der Drehachse 3 weitere entsprechende Tragringe 12 anschließen, die die Siebwandung 9 in entsprechend viele Einzelelemente 14 untergliedern).

Zwischen den gezeigten Einzelelementen 14 verläuft ein mit dem Tragring 12 (beispielsweise durch Verschweißen) verbundener Steg 15, der ebenfalls ringförmig ausgebildet ist und in Umfangsrichtung auf dem Tragring 12 aufliegt. Während Tragring 12 und Steg 15 im gezeigten Ausführungsbeispiel als zwei separate Bauteile gezeigt sind, ist es selbstverständlich nicht ausgeschlossen, Tragring 12 und Steg 15 einteilig auszubilden.

Schließlich ist pro Tragring 12 ein Klemmring 13 vorhanden (der ebenfalls als Metallring bzw. Metallband vorliegen kann), der wiederum mit dem Steg 15 verbunden, vorzugsweise verschweißt, ist. Im Ergebnis werden durch den Tragring 12, den Steg 15 und den Klemmring 13 zwei in Umfangsrichtung der Siebtrommel 4 umlaufende Ringnuten 24 gebildet, in die sich jeweils ein Einzelelement 14 der Siebwandung 9 erstreckt und hierbei klemmend fixiert wird (wobei auch die genannten Einzelelemente 14 wiederum aus einzelnen Abschnitten, beispielsweise aus jeweils zwei Halbkreisringen, bestehen können).

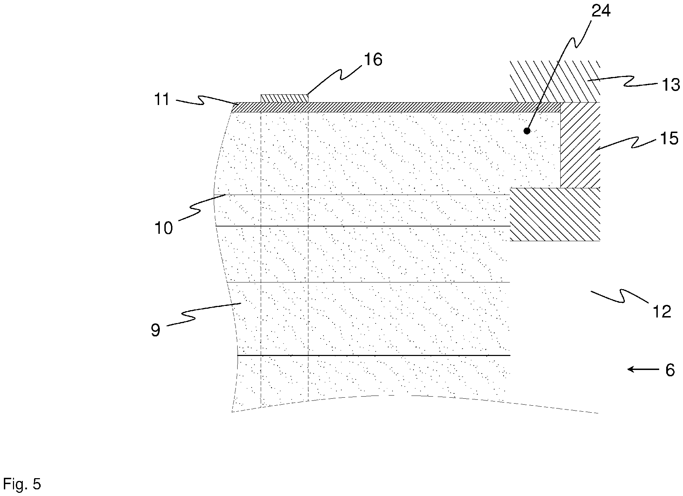

Figur 5 zeigt einen Ausschnitt im Bereich einer Stirnseite 5 einer möglichen Ausführungsform einer erfindungsgemäßen Siebtrommel 4 (wobei die Siebtrommel 4 auch im Bereich ihrer zweiten Stirnseite 5 prinzipiell entsprechend Figur 5 ausgebildet sein kann; eventuell vorhandene zusätzliche Abschnitte, wie beispielsweise ein stirnseitig vorhandener Trägerring, über den die Siebtrommel 4, z. B. mit dem in Figur 1 gezeigten Antriebsarm 22 verbunden werden kann, sind im Übrigen aus Übersichtsgründen nicht gezeigt, können jedoch vorhanden sein; ebenfalls kann die in den Figuren 3 bis 5 gezeigte Siebtrommel 4 selbstverständlich anstelle der in Figur 1 gezeigten Siebtrommel 4 in der dort abgebildeten Vorrichtung montiert sein).

Wie nun Figur 5 zu entnehmen ist, kann auch im Bereich einer oder beider Stirnseiten 5 (zusätzlich zu dem in Figur 3 gezeigten Bereich) ein Tragring 12, ein Klemmring 13 und ein die genannten Abschnitte verbindender Steg 15 vorhanden sein, so dass die Siebwandung 9 auch im Bereich der Stirnseiten 5 ausschließlich durch Klemmung in der gezeigten Ringnut 24 fixiert sein kann.

Die jeweiligen Tragringe 12 sind im Übrigen vorzugsweise mit Hilfe von, beispielsweise parallel zur Drehachse 3 verlaufenden, Verbindungsstangen miteinander verbunden, so dass die Tragstruktur in diesem Fall im Wesentlichen aus den Verbindungsstangen, den Tragringen 12, den Klemmringen 13 sowie den Stegen 15 besteht.

Schließlich zeigt Figur 5 exemplarisch, dass neben den Trag- und Klemmringen 13 zusätzliche Spannringe 16 (beispielsweise in Form von in Umfangsrichtung der Siebtrommel 4 verlaufenden Metallbändern) vorhanden sein können, die an den Siebwandbergen 11 anliegen und eine weitere Erhöhung der Stabilität der Siebtrommel 4 bewirken.

Die vorliegende Erfindung ist nicht auf die dargestellten und beschriebenen Ausführungsbeispiele beschränkt. Abwandlungen im Rahmen der Patentansprüche sind ebenso möglich wie eine beliebige Kombination der beschriebenen Merkmale, auch wenn sie in unterschiedlichen Teilen der Beschreibung bzw. den Ansprüchen oder in unterschiedlichen Ausführungsbeispielen dargestellt und beschrieben sind, vorausgesetzt, dass die Merkmale von Anspruch 1 verwirklicht sind.

### Bezugszeichenliste

- 1: Abwasser
- 2: Antrieb
- 3: Drehachse
- 4: Siebtrommel
- 5: Stirnseite
- 6: Öffnung
- 7: Austragsvorrichtung
- 8: Zuführbereich
- 9: Siebwandung
- 10: Siebwandtal
- 11: Siebwandberg
- 12: Tragring
- 13: Klemmring
- 14: Einzelelement
- 15: Steg
- 16: Spannring
- 17: Auswurf
- 18: Container
- 19: Spritzdüsenleiste
- 20: Abwasserkanal
- 21: Mitnehmerleiste
- 22: Antriebsarm
- 23: Stützring
- 24: Ringnut

- S: Strömungsrichtung des Abwassers

## Patentansprüche

1. Siebtrommel für eine Vorrichtung zum Entfernen von Siebgut aus einer Flüssigkeit, insbesondere Abwasser (1), wobei die Siebtrommel (4) zumindest im Bereich einer Stirnseite (5) eine Öffnung (6) aufweist, über die sie mit der das Siebgut mitführenden Flüssigkeit beschickbar ist, wobei die Siebtrommel (4) eine gefaltete und eine Vielzahl von Sieböffnungen (6) aufweisende Siebwandung (9) umfasst, und wobei die Siebtrommel (4) eine Tragstruktur aufweist, **dadurch gekennzeichnet, dass** die Tragstruktur die Siebwandung (9) ausschließlich klemmend fixiert.

2. Siebtrommel gemäß dem vorangegangenen Anspruch, **dadurch gekennzeichnet, dass** die Siebwandung (9) zickzackartig oder stufenförmig gefaltet ist, so dass sich Siebwandtäler (10) mit Siebwandbergen (11) abwechseln.

3. Siebtrommel gemäß dem vorangegangenen Anspruch, **dadurch gekennzeichnet, dass** die Siebwandtäler (10) und die Siebwandberge (11) parallel oder windschief zur Drehachse (3) der Siebtrommel (4) verlaufen.

4. Siebtrommel gemäß Anspruch 2 oder 3, **dadurch gekennzeichnet. dass** die Tragstruktur wenigstens einen Tragring (12) umfasst, wobei der Tragring (12) derart von der Siebwandung (9) umgeben ist, dass die Siebwandtäler (10) an dem Tragring (12) in Umfangsrichtung der Siebtrommel (4) anliegen.

5. Siebtrommel gemäß einem der Ansprüche 2 bis 4, **dadurch gekennzeichnet, dass** die Tragstruktur wenigstens einen Klemmring (13) umfasst, wobei der Klemmring (13) die Siebwandung (9) derart umgibt, dass er in Umfangsrichtung der Siebtrommel (4) an den Siebwandbergen (11) anliegt.

6. Siebtrommel gemäß den Ansprüchen 4 und 5, **dadurch gekennzeichnet, dass** jeweils ein Tragring (12) und ein Klemmring (13) in einer gemeinsamen und senkrecht zur Drehachse (3) verlaufenden Ebene angeordnet sind.

7. Siebtrommel gemäß den Ansprüchen 4 und 5 oder 6, **dadurch gekennzeichnet, dass** die Siebwandung (9) unter einer Vorspannung zwischen den Tragringen (12) und den Klemmringen (13) eingespannt ist.

8. Siebtrommel gemäß den Ansprüchen 4 und 5 oder einem der Ansprüche 6 und 7, **dadurch gekennzeichnet, dass** die Siebwandung (9) mehrere in Richtung der Drehachse (3) der Siebtrommel (4) nebeneinander angeordnete Einzelelemente (14) umfasst, wobei wenigstens zwei der Einzelelemente (14) in Richtung der Drehachse (3) durch einen oder mehrere in Umfangsrichtung der Siebtrommel (4) verlaufende Stege (15) voneinander getrennt sind, und wobei wenigstens ein Tragring (12) und ein Klemmring (13) mit Hilfe des oder der Stege (15) miteinander verbunden sind.

9. Siebtrommel gemäß dem vorangegangenen Anspruch, **dadurch gekennzeichnet, dass** zumindest ein Teil der Tragringe (12) und/oder zumindest ein Teil der Klemmringe (13) mit einem oder mehreren der Stege (15) stoffschlüssig verbunden sind.

10. Siebtrommel gemäß Anspruch 8 oder 9, **dadurch gekennzeichnet, dass** wenigstens zwei der Einzelelemente (14) der Siebwandung (9) mit einem gemeinsamen Tragring (12) und/oder einem gemeinsamen Klemmring (13) in Kontakt stehen.

11. Siebtrommel gemäß einem der vorangegangenen Ansprüche, **dadurch gekennzeichnet, dass** die Siebtrommel (4) eine oder mehrere in Richtung der Drehachse (3) zueinander beabstandete Spannringe (16) umfasst, die die Siebwandung (9) im Bereich ihrer Außenseite umgeben.

12. Siebtrommel gemäß dem vorangegangenen Anspruch, **dadurch gekennzeichnet, dass** die Spannringe (16) in Richtung der Drehachse (3) der Siebtrommel (4) zwischen den Tragringen (12) und/oder zwischen den Klemmringen (13) angeordnet sind.

13. Vorrichtung zum Entfernen von Siebgut aus einer Flüssigkeit, insbesondere Abwasser (1),
- mit einer im Betrieb der Vorrichtung zumindest teilweise in die Flüssigkeit eintauchenden und mit Hilfe eines Antriebs (2) um eine Drehachse (3) antreibbaren Siebtrommel (4), die zumindest im Bereich einer Stirnseite (5) eine Öffnung (6) aufweist, über die sie mit der das Siebgut mitführenden Flüssigkeit beschickbar ist, und
- mit einer wenigstens teilweise innerhalb der Siebtrommel (4) angeordneten Austragsvorrichtung (7) für das Siebgut, vorzugsweise in Form einer Schneckenfördereinrichtung oder einer Absaugeinrichtung,
- wobei die Austragsvorrichtung (7) innerhalb der Siebtrommel (4) einen Zuführbereich (8), beispielsweise in Form eines Einwurftrichters, für das Siebgut aufweist,
**dadurch gekennzeichnet.**
**dass** die Siebtrommel (4) gemäß einem der vorangegangenen Ansprüche ausgebildet ist.

## Claims

1. Sieve drum for an installation to remove sievings from a liquid, especially sewage (1), in which case the sieve drum (4) has an opening (6) at least in a front side area (5), so it can be filled with a liquid that carries the sievings, the sieve drum (4) comprising a folded sieve wall (9) with many sieve openings (6) and the sieve drum (4) comprising a support structure, **characterized in that** the support structure fixes the sieve wall (9) only in a clamping way.

2. Sieve drum according to the previous claim, **characterized in that** the sieve wall (9) is folded in zigzag or in steps, so that sieve wall depressions (10) alternate with sieve wall elevations (11).

3. Sieve drum according to the previous claim, **characterized in that** the sieve wall depressions (10) and the sieve wall elevations (11) run parallel or skew to the rotating axis (3) of the sieve drum (4).

4. Sieve drum according to claim 2 or 3, **characterized in that** the support structure comprises at least one support ring (12), and the support ring (12) is surrounded by the sieve wall (9) in such a way that the sieve wall depressions (10) abut on the support ring (12) in circumferential direction of the sieve drum (4).

5. Sieve drum according to one of the claims 2 to 4, **characterized in that** the support structure comprises at least one clamping ring (13), the clamping ring (13) surrounding the sieve wall (9) in such a way that it abuts on the sieve wall elevations (11) in circumferential direction of the sieve drum (4).

6. Sieve drum according to claims 4 and 5, **characterized in that** in each case a support ring (12) and a clamping ring (13) are arranged in a common plane extending perpendicularly to the rotating axis (3).

7. Sieve drum according to claims 4 and 5 or 6, **characterized in that** the sieve wall (9) is clamped under a pre-stress between the support rings (12) and the clamping rings (13).

8. Sieve drum according to claims 4 and 5 or one of the claims 6 and 7, **characterized in that** the sieve wall (9) has several individual elements (14) arranged beside one another in the direction of the rotating axis (3) of the sieve drum (4), wherein at least two of the individual elements (14) are separated in the direction of the rotating axis (3) by one or several webs (15) running in circumferential direction of the sieve drum (4), and wherein at least one support ring (12) and one clamping ring (13) are connected to one another with the help of the web(s) (15).

9. Sieve drum according to the previous claim, **characterized in that** at least some of the support rings (12) and/or at least some of the clamping rings (13) are firmly bonded to one or several of the webs (15).

10. Sieve drum according to claim 8 or 9 **characterized in that** at least two of the individual elements (14) of the sieve wall (9) make contact with a common support ring (12) and/or a common clamping ring (13).

11. Sieve drum according to one of the previous claims, **characterized in that** the sieve drum (4) comprises one or several tension rings (16) spaced from one another in the direction of the rotating axis (3) that surround the sieve wall (9) in its outer side area.

12. Sieve drum according to the previous claim, **characterized in that** the tension rings (16) are arranged between the support rings (12) and/or between the clamping rings (13) in the direction of the rotating axis (3) of the sieve drum (4).

13. Installation to remove sievings from a liquid, especially sewage (1),
- with a sieve drum (4), which is at least partially immersed in the liquid while the installation is in operation and can be moved with the help of a drive (2) around a rotating axis (3), with an opening (6) at least in the area of a front side (5) through which it can be filled with the liquid that carries the sievings, and
- with at least one discharge mechanism (7) arranged at least partially inside the sieve drum (4) for the sievings, preferably in form of a screw conveyor or a suction device,
- wherein the discharge mechanism (7) inside the sieve drum (4) has a feeding area (8) that can have the form of a collecting funnel for the sievings,
**characterized in that**
the sieve drum (4) is designed according to one of the previous claims.

## Revendications

1. Tambour cribleur pour un dispositif pour éliminer des déchets de dégrillage à partir d'un liquide, en particulier d'eaux usées (1), le tambour cribleur (4) présentant une ouverture (6) au moins dans la zone d'une face frontale (5), par laquelle il peut être chargé avec le liquide charriant les déchets de dégrillage, le tambour cribleur (4) comprenant une paroi de criblage (9) pliée présentant une multitude d'ouvertures de criblage (6), et le tambour cribleur (4) présente une structure de support, **caractérisé en ce que** la structure de support fixe la paroi de criblage (9) exclusivement par serrage.

2. Tambour cribleur selon la revendication précédente, **caractérisé en ce que** la paroi de criblage (9) est pliée en zigzag ou en escalier de sorte que des creux (10) de paroi de criblage alternent avec des arêtes (11) de paroi de criblage.

3. Tambour cribleur selon la revendication précédente, **caractérisé en ce que** les creux (10) de paroi de criblage et les arêtes (11) de paroi de criblage s'étendent parallèlement ou inclinés par rapport à l'axe de rotation (3) du tambour cribleur (4).

4. Tambour cribleur selon la revendication 2 ou 3, **caractérisé en ce que** la structure de support comporte au moins un anneau de support (12), l'anneau de support (12) étant entouré par la paroi de criblage (9) de sorte que les creux (10) de paroi de criblage reposent contre l'anneau de support (12) dans la direction circonférentielle du tambour cribleur (4).

5. Tambour cribleur selon l'une des revendications 2 à 4, **caractérisé en ce que** la structure de support comprend au moins un anneau de serrage (13), l'anneau de serrage (13) entourant la paroi de criblage (9) de sorte que l'anneau de serrage reposent contre les arêtes (11) de paroi de criblage dans la direction circonférentielle du tambour cribleur (4).

6. Tambour cribleur selon les revendications 4 et 5, caractérisé en ce qu'un anneau de support (12) et un anneau de serrage (13) sont respectivement disposées dans un plan commun s'étendant perpendiculairement à l'axe de rotation (3).

7. Tambour cribleur selon les revendications 4 et 5 ou 6, **caractérisé en ce que** la paroi de criblage (9) est serrée sous précontrainte entre les anneaux de support (12) et les anneaux de serrage (13).

8. Tambour cribleur selon les revendications 4 et 5 ou l'une des revendications 6 et 7, **caractérisé en ce que** la paroi de criblage (9) comprend plusieurs éléments individuels (14) disposés côte à côte dans la direction de l'axe de rotation (3) du tambour cribleur (4), au moins deux des éléments individuels (14) étant séparés l'un de l'autre dans la direction de l'axe de rotation (3) par une ou plusieurs âmes (15) s'étendant dans la direction circonférentielle du tambour cribleur (4), et au moins un anneau de support (12) et un anneau de serrage (13) étant reliées l'un à l'autre à l'aide de l'âme ou des âmes (15).

9. Tambour cribleur selon la revendication précédente, caractérisé en ce qu'au moins une partie des anneaux de support (12) et/ou au moins une partie des anneaux de serrage (13) sont reliées par conjugaison de matières à l'une ou plusieurs des âmes (15).

10. Tambour cribleur selon la revendication 8 ou 9, **caractérisé en ce qu'**au moins deux des éléments individuels (14) de la paroi de criblage (9) sont en contact avec un anneau de support (12) commun et/ou un anneau de serrage (13) commun.

11. Tambour cribleur selon l'une des revendications précédentes, **caractérisé en ce que** le tambour cribleur (4) comprend un ou plusieurs bagues de serrage (16) espacées l'une de l'autre dans la direction de l'axe de rotation (3), qui entourent la paroi de criblage (9) dans la zone de son côté extérieur.

12. Tambour cribleur selon la revendication précédente, **caractérisé en ce que** les bagues de serrage (16) sont disposées dans la direction de l'axe de rotation (3) du tambour cribleur (4) entre les anneaux de support (12) et/ou entre les anneaux de serrage (13).

13. Dispositif pour éliminer des déchets de dégrillage à partir d'un liquide, en particulier d'eaux usées (1),
- avec un tambour cribleur (4) qui, pendant le fonctionnement du dispositif, immerge au moins partiellement dans le liquide et peut être entraîné autour d'un axe de rotation (3) à l'aide d'un entraînement (2), qui présente, au moins dans la zone d'une face frontale (5), une ouverture (6) par laquelle il peut être chargé avec le liquide charriant les déchets de dégrillage, et
- avec un dispositif de déversement (7), de préférence sous la forme d'un dispositif de convoyage à vis sans fin ou d'un dispositif d'aspiration, pour les déchets de dégrillage, disposé au moins partiellement au sein du tambour cribleur (4),
- le dispositif de déversement (7) comportant à l'intérieur du tambour cribleur (4) une zone d'alimentation (8), par exemple sous la forme d'une trémie d'alimentation, pour les déchets de dégrillage,
**caractérisé en ce que**
le tambour cribleur (4) se présente sous une forme selon l'une des revendications précédentes.
